## Europäisches Patentamt
## European Patent Office
## Office européen des brevets

(19)

(11) Numéro de publication: **0 045 681**
A1

(12)

# DEMANDE DE BREVET EUROPEEN

(21) Numéro de dépôt: **81401187.0**

(22) Date de dépôt: **24.07.81**

(51) Int. Cl.³: **C 03 B 37/16**

(30) Priorité: **31.07.80 FR 8016917**

(43) Date de publication de la demande:
**10.02.82 Bulletin 82/6**

(84) Etats contractants désignés:
**BE DE GB IT NL SE**

(71) Demandeur: **SOCAPEX**
**10 bis, quai Léon Blum**
**F-92150 Suresnes(FR)**

(72) Inventeur: **Lamarche, Dominique**
**THOMSON-CSF SCPI-173, bld Haussmann**
**F-75360 Paris Cedex 08(FR)**

(72) Inventeur: **Soster, Marie-Claude**
**THOMSON-CSF SCPI-173, bld Haussmann**
**F-75360 Paris Cedex 08(FR)**

(74) Mandataire: **Guilguet, Philippe et al,**
**"THOMSON-CSF" - SCPI 173, bld Haussmann**
**F-75360 Paris Cedex 08(FR)**

(54) Outillage de cassure collective de fibres optiques.

(57) L'invention concerne un outillage permettant de sectionner en même temps plusieurs fibres optiques parallèles suivant des faces situées dans un même plan perpendiculaire à la direction générale des fibres optiques.

L'outillage comporte à cet effet un socle (1) muni d'une réglette contre laquelle coulisse un sabot (3) portant le support (6) de l'outil de coupe (10) dont le tranchant, au cours de la translation du sabot (3) rayre successivement les fibres optiques (F) tendues tangentiellement au sommet d'un tas (13) monté sur un support fendu (14). Les fibres sont prises entre deux pièces de pincement de part et d'autre de la droite d'appui de celles-ci sur le tas (13). Les fibres sont clivées à l'endroit de la rayure du verre, en exerçant une brusque traction ou flexion de la fibre optique.

Application à la préparation d'une épissure en câble optique à plusieurs fibres.

FIG.1

EP 0 045 681 A1

## OUTILLAGE DE CASSURE COLLECTIVE DE
## FIBRES OPTIQUES

L'invention concerne un outillage permettant de sectionner en même temps plusieurs fibres optiques suivant des faces optiques de qualité suffisante pour pouvoir être utilisées telles quelles dans une épissure de câble optique multifibre.

On sait, en effet, que pour "épissurer" deux câbles optiques à plusieurs fibres, une excellente solution, bien que difficile à mettre en oeuvre, consiste à couper les fibres suivant des sections planes aussi parfaites que possible de telle sorte qu'il soit possible de souder les câbles fibre à fibre sans retoucher les longueurs de celles-ci.

Une méthode connue pour des fibres isolées avec une gaine de faible épaisseur, consiste à opérer par clivage, en rayant d'abord la fibre au moyen d'un outil coupant très dur, tel qu'un diamant, pénétrant jusqu'au verre à travers la gaine, puis à casser la fibre en appliquant une brusque contrainte mécanique.

On connaît des outils permettant de mettre en oeuvre cette méthode, mais ils sont conçus pour opérer fibre par fibre. Les inconvénients de tels outils sont les suivants :

a) l'opération est fastidieuse en cas de câble à nombreuses fibres;

b) les sections planes des tronçons ne sont pas alignées et l'épissure n'est pas possible sans recouper les fibres.

L'invention permet de remédier à ces inconvénients en disposant les fibres parallèlement, dans un plan tangent à un tas de forme cylindrique et à rayer toutes les fibres en des points alignés, cette opération ayant lieu au cours d'une seule et même translation d'un outil de coupe réglé en hauteur avec une extrême précision.

L'outillage selon l'invention est du type comportant des premiers moyens définissant un plan de référence et une direction de translation parallèle au plan de référence, des deuxièmes moyens définissant une droite d'appui des fibres optiques au sommet d'une surface convexe, la droite d'appui étant parallèle à la direction de translation, des troisièmes moyens permettant de placer un outil de coupe au-dessus du plan de référence, tout en autorisant sa translation le long d'une droite parallèle à la droite d'appui de telle sorte que la partie coupante de l'outil de coupe puisse rayer toute fibre se trouvant sur la droite d'appui.

Il est caractérisé en ce que les premiers moyens sont constitués par une plateforme solidaire d'une réglette de translation présentant une face parallèle à cette droite de translation; que les deuxièmes moyens comportent au moins un dispositif de pincement des fibres dans un plan contenant la droite d'appui; et que les troisièmes moyens comportent un support de l'outil de coupe présentant une face destinée à reposer sur la plateforme et une face destinée à coulisser le long de la réglette, des moyens de réglage fin permettant de fixer la hauteur optimale de l'outil de coupe au-dessus du plan de référence.

Dans un mode préférentiel de réalisation, le tranchant de l'outil de coupe a un rayon de courbure compris entre 1 mm et 30 mm dans un plan perpendiculaire à l'axe des fibres. Lorsque l'outil de coupe est placé sur l'outillage de l'invention, ledit tranchant raye la section de la fibre, tangentiellement.

Cette forme du tranchant de l'outil de coupe palie à l'usure de l'outil de coupe. L'outil de coupe est, en fait, rapidement érodé, puisqu'après une dizaine de rayures, l'outil de coupe prend une surface bosselée qui désagrège son tranchant. Aussi, la rayure devient de mauvaise qualité et il est nécessaire de changer l'outil de coupe. Ladite forme bombée de l'outil de coupe a le double but de donner un meilleur angle d'attaque de la fibre à l'outil de coupe et de présenter un grand nombre de points susceptibles de rayer la fibre. En effet, au fur et à mesure que le tranchant de l'outil de coupe s'use, le point dudit tranchant d'attaque de la fibre se déplace le long de la partie bombée et se renouvelle ainsi.

Le rebondissement dudit tranchant est plus particulièrement adpaté au cas où l'outil de coupe suit la circonférence de la section de la fibre optique. En effet, ce rebondissement favorise l'attaque de la fibre par un point du tranchant puis le contour de la circonférence de la fibre par l'outil de coupe et enfin l'attaque de la fibre par un autre point du tranchant symétrique du premier par rapport au sommet du rebondissement du tranchant. La rayure de la fibre est, donc, réalisée par deux points du rebondissement.

Dans un mode préférentiel de réalisation, l'outillage selon l'invention comporte un dispositif ressort reliant un bloc fendu, portant l'outil de coupe, au corps dudit support. Ce dispositif ressort est, généralement, une lame souple disposée entre ce bloc fendu portant l'outil de coupe et le corps du support. Ce dispositif introduisant un mouvement élastique entre le corps du support qui est fixé rigidement et l'outil de coupe a le but de maintenir une pression constante de l'outil de coupe sur la fibre alors que l'outil de coupe a différentes positions verticales.

Le réglage de la pression a une influence directe sur la qualité de coupe de la fibre et il est important d'avoir une pression constante tout en conservant une plage de tolérance pour les autres paramètres. En effet, lorsque l'outil de coupe arrive en contact avec la fibre optique, il provoque un choc sur la fibre qui la raye. Ce choc se propage, ensuite, mécaniquement à travers la fibre par zones concentriques autour du point de choc. Cette propagation modifie la structure de la fibre qui facilite sa cassure selon une section perpendiculaire à l'axe de la fibre. Si le choc est trop violent, il se crée des marques secondaires pouvant atteindre le coeur de la fibre qui n'est alors, plus homogène. La propagation de la lumière à travers la fibre en est donc perturbée. Aussi, il est nécessaire pour réaliser une rayure correcte de ne pas produire de marques secondaires. On remarque, également, que si la rayure est trop profonde, des marques secondaires atteindront, de la même façon, le coeur de la fibre.

Le dispositif ressort à lame souple, maintenant une pression

4

constante pour différentes positions verticales de l'outil de coupe, permet le déplacement vertical de l'outil de coupe au cours de l'opération de rayure des fibres d'un même câble, c'est-à-dire qu'il est possible de régler l'outillage pour toute l'opération de rayure bien que le diamètre des fibres varie et de rayer les fibres en faisant suivre à l'outil de coupe une partie de la circonférence de la section de la fibre.

Selon l'utilisation de l'outillage de l'invention, les pressions appliquées sur la fibre varient entre quelques grammes et 400 grammes.

Pour des pressions importantes, comprises entre 50 g et 500 g, le dispositif ressort compense les variations des diamètres des fibres. Afin d'appliquer ces pressions, un ressort comprimé est disposé entre le bloc fendu et le corps du support. La rayure est faite sur le dessus de la fibre optique.

Pour des pressions plus faibles, le dispositif ressort permet à l'outil de coupe de suivre la circonférence de la fibre optique. Dans ce cas, le point d'impact de l'outil de coupe ne demande pas d'être localisé précisément et le réglage initiale de la hauteur de la fibre est tolérant puisqu'une variation de ladite hauteur de 30 $\mu$m ou 40 $\mu$m est admissible pour des fibres de diamètre moyen 125 $\mu$m. En fait, la lame souple maintient une pression constante sur une variation de hauteur plus importante, mais les conditions de tenue horizontale de la fibre exigent que l'attaque de la fibre ne se produise pas trop bas sur la section de la fibre.

La fibre optique est maintenue horizontalement par une gorge creusée sur la droite d'appui des fibres.

Le bloc fendu de l'outillage selon l'invention comporte, préférentiellement, un trou cylindrique dans lequel l'outil de coupe est mobile. La pression exercée sur la fibre résulte alors uniquement du poids de l'outil de coupe. Cette pression est faible et est comprise entre 3 g et 10 g. L'outil de coupe suit le contour de la circonférence de la fibre optique par l'effet de la résultante entre son poids et la réaction de la fibre. Le poids est déterminé pour rayer la fibre sur une profondeur inférieure à 5 μm. Le réglage en hauteur, pour les mêmes raisons que précédemment, est tolérant jusqu'à 40 μm.

L'invention sera mieux comprise, et d'autres caractéristiques apparaîtront, au moyen de la description qui suit, et des dessins qui l'accompagnent, parmi lesquels :

- la figure 1 est une coupe longitudinale d'une réalisation de l'invention,

- les figures 2 et 3 sont des vues par dessus et en élévation de la même réalisation,

- la figure 4 représente une coupe longitudinale d'un autre exemple de réalisation de l'invention,

- la figure 5 représente le profil d'une réalisation de la partie tranchante de l'outil de coupe,

- la figure 6 représente une section d'une fibre optique rayée.

Un plan de référence est défini par une plateforme 1 qui constitue un socle pour les moyens de pincement et d'appui des fibres optiques désignées par la référence F sur chaque figure.

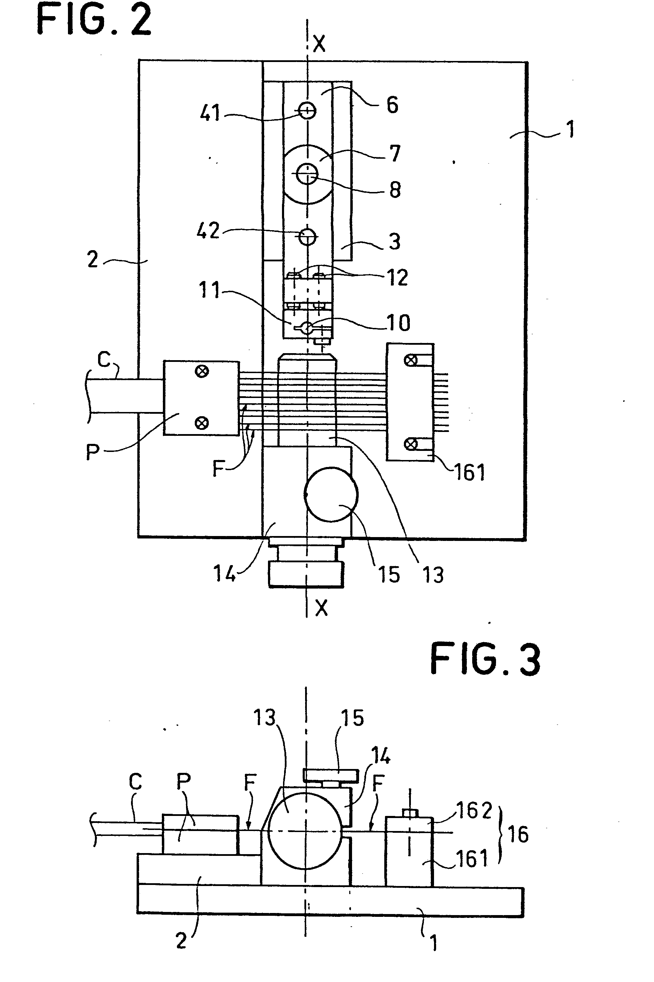

La même plateforme sert de surface de glissement pour le sabot 3 sur lequel est monté le support proprement dit 6 de l'outil de coupe 10. La translation du sabot 3 est guidée par une réglette 2 contre le bord de laquelle glisse un bord rectiligne du sabot 3, ainsi qu'il est visible à la figure 2.

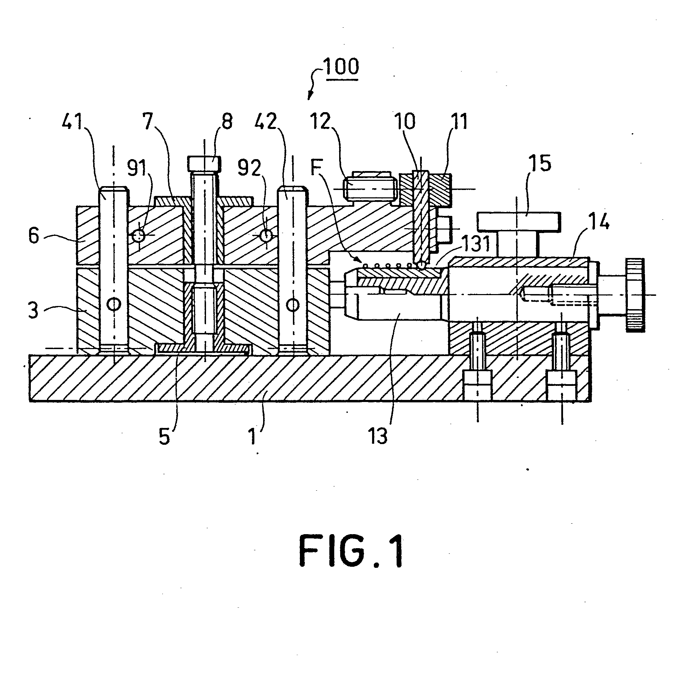

Les moyens de pincement et d'appui des fibres optiques comportent en premier lieu une pièce de préparation P dans laquelle un câble optique C pénètre dans son intégrité et d'où il ressort débarrassé de sa gaine et de son âme (jonc central) lesquelles ont été sélectionnées pour ne laisser dépasser de la pièce P que les fibres optiques soigneusement mises à plat. Les fibres sortant de la pièce P s'appuient sur une droite 131 (figure 1), parallèle au plan de référence, qui est une génératrice d'un cylindre de révolution 13 monté sur un support fendu 14 bridé par une vis 15. Enfin, un étau 16 pince les fibres, au-delà de la droite d'appui, entre deux mors 161 et 162, de telle sorte que les fibres soient maintenues appuyées avec une certaine tension.

Les moyens de support et de réglage fin de l'outil de coupe sont réalisés de la manière suivante. Le sabot 3 comporte, dans un plan de symétrie de trace XX (figure 2), deux colonnes parallèles 41 et 42 émergeant du sabot, pénétrant dans le support 6 et destinées à guider le support 6 lors des déplacements verticaux qui lui sont imposés par le réglage fin. En outre, le sabot 3 et le support 6 comportent deux manchons 5 et 7 situés sur un même axe perpendiculaire au plan de référence, ces manchons étant taraudés à des pas différents mais très voisins. Une même vis 8, dite "différentielle", possèdant deux filetages aux pas respectifs des manchons 5 et 7 est montée dans ces manchons. Enfin, des tampons tangents 91 et 92 appuient sur les colonnes 41 et 42 pour immobiliser le support 6.

L'outil de coupe 10 est bridé dans un bloc fendu 11. Des vis de réglage 12, situées de part et d'autre du plan de trace XX permettent de faire varier l'orientation du tranchant de l'outil 10.

Le mode d'utilisation de l'outillage est le suivant. Après montage des fibres de la manière déjà indiquée, l'outil de coupe est déplacé par glissement du sabot 3 sur le socle 1 contre la réglette 2, de telle façon que le tranchant de l'outil raye les fibres le plus légèrement possible tout en pénétrant jusqu'au verre. Une fois la rayure achevée, les fibres sont cassées par traction ou flexion brusque. L'outil de coupe est alors ramené sur une position où le cylindre 13 est entièrement dégagé. Un nouvelle opération est alors possible avec un nouveau câble.

La vis différentielle permet de régler à quelques microns près la profondeur de rayure, lorsque la différence de pas des taraudages 5 et 7 est suffisamment petite.

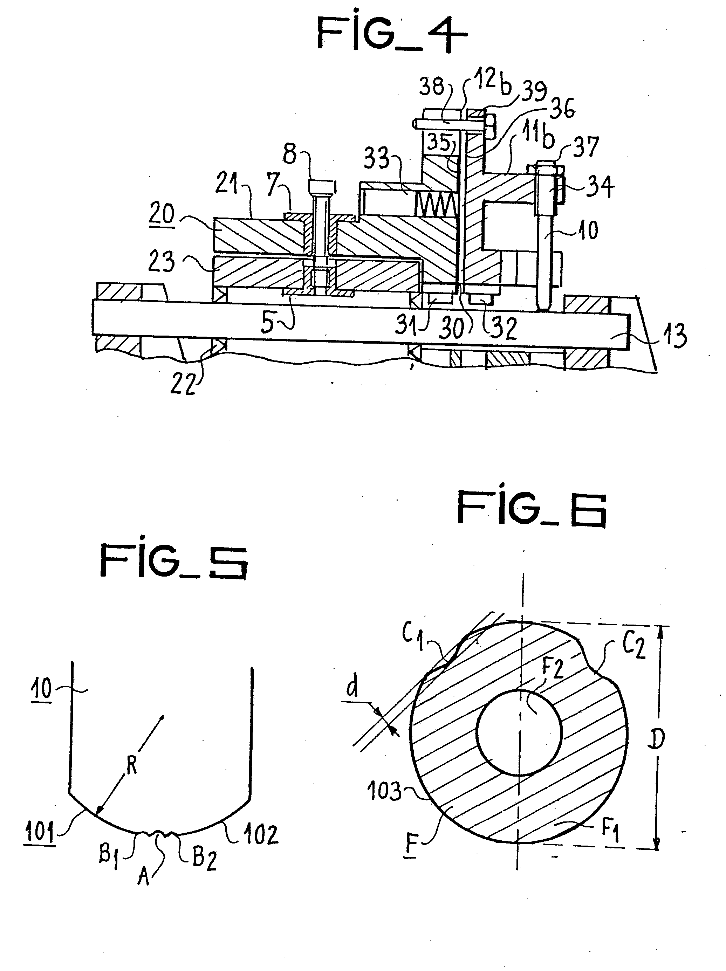

La figure 4 représente une coupe longitudinale d'un autre exemple de réalisation de l'invention. Sur cette figure, les mêmes éléments que ceux de la figure 1 portent les mêmes références. Les moyens de pincement et d'appui dee fibres optiques sont les mêmes que ceux des figures 1, 2 et 3. La figure 4 ne montre que le cylindre de révolution 13 qui est maintenu horizontalement.

Le support de l'outil de coupe comporte trois parties. La première partie est constituée par un sabot 23 qui se déplace parallèlement à l'axe du cylindre de révolution et qui est fixé sur celui-ci par une pièce 22 circulaire, creuse et solidaire du sabot 23. La deuxième partie 21 est rattachée au sabot 23 par une vis 8, dite différentielle et se déplace verticalement par rapport au sabot 23 grâce à la vis 8. La vis 8 possède deux filetages aux pas respectifs des manchons 5 et 7 pour être montée dans les manchons 5 et 7. Le sabot 23 et la deuxième partie 21 constituent le corps 20 du support de l'outil de coupe. La troisième partie est le bloc fendu 11b qui porte l'outil de coupe.

La deuxième partie comporte une paroi verticale 35 contre laquelle vient se placer la paroi verticale 36, homologue de la paroi 35 pour le bloc fendu 11b. La lame souple 30 est une pièce rectangulaire et plane qui vient de placer sous les parois verticales 35 et 36 grâce à deux vis 31 et 32, supportant, ainsi, le boc fendu 11b. Celui-ci est, également, rattaché à la deuxième partie 21 du corps 20 par une vis de réglage 12b qui s'introduit dans deux filetages 38 et 39 horizontaux respectivement de la deuxième partie 21 et du bloc fendu 11b. Ces deux filetages 38 et 39, disposés en regard l'un de l'autre, sont percés dans le haut des deux parois 35 et 36. Un ressort comprimé 33 prend appui sur la deuxième partie 21 et repousse la paroi 36 du bloc fendu 11b, maintenant ainsi une pression sur le bloc fendu 11b. Le bloc fendu 11b comporte, en outre, un trou cylindrique 34 vertical dans lequel l'outil de coupe est fixé par la pièce 37.

Lorsque la vis de réglage 12b est entièrement introduite dans les filetages 38 et 39, l'outil de coupe est relevé. Par dévissage progressif de cette vis 12b, on abaisse l'outil de coupe à la hauteur désirée. Le sabot 23 se déplace, alors, le long du cylindre 13 jusqu'à venir en contact avec la première fibre à rayer. Par un équilibrage correct du bloc 11b réalisé grâce à la lame souple, l'outil de coupe raye la fibre optique en suivant sa circonférence 103. La rayure, ainsi obtenue, est de 5 µm environ. Le sabot 23 continue ensuite à se déplacer horizontalement et raye de la même façon les autres fibres F du câble à épisser. D'un seul mouvement du support de l'outil de coupe et plus particulièrement du sabot 23, on raye, ainsi, toutes les fibres d'un même câble. Il est à noter qu'une fois l'outillage réglé, on peut rayer plusieurs câbles en les remplaçant les uns après les autres sur l'outillage de l'invention.

La figure 5 représente le profil d'une réalisation de la partie tranchante de l'outil de coupe. La partie tranchante de l'outil de coupe 10 a la forme d'un plan bombé dont les rayons de courbure R sont compris entre 1 mm et 30 mm, formant ainsi un rebondissement 101. Le rebondissement 101 compte, donc, un sommet A et des pentes arrondies de part et d'autre du sommet A. Quand l'outil de coupe est positionné sur l'outillage de l'invention, le sommet A est tourné vers le bas et deux lignes arrondies 102 sont placées dans le même plan que celui de la section des fibres à rayer et dans la direction de déplacement du sabot. Le sommet A présente, ici, des bosselages qui résultent des rayures successives de fibres optiques. Celui-ci ne peut donc plus attaquer correctement les fibres et l'outil de coupe rayera les fibres par les points $B_1$ et $B_2$ situés sur la ligne 102, et en dehors des bosselages du sommet A.

La figure 6 représente une section d'une fibre optique rayée par l'outillage de la figure 4 muni de l'outil de coupe de la figure 5. La fibre optique est formée de son coeur F2 cylindrique, entouré par la gaine externe F1, cylindrique et concentrique du coeur F2. Le diamètre D de la fibre est d'environ 120 μm. La circonférence 103 de la fibre F et de la gaine externe F1 comporte deux rayures $C_1$ et $C_2$ symétriques par rapport au diamètre vertical de la fibre. Les rayures $C_1$ et $C_2$ n'ont pas une profondeur uniforme, selon la résistance ponctuelle de la gaine externe F1 mais leur profondeur d maximum est inférieure à 5 μm. Les deux rayures $C_1$ et $C_2$ correspondent au passage des deux points $B_1$ et $B_2$ de l'outil de coupe 10.

Lorsque l'outil de coupe 10 de la figure 5 est déplacé par l'outillage de l'invention, le point d'attaque $B_2$ entre en contact avec la fibre F. Ensuite, l'outil de coupe 10, sous l'action de la lame souple 30 et de la résistance de la fibre F, suit la circonférence 103 de la gaine externe F1 en réalisant la rayure $C_1$.

Lorsque le point $B_2$ de la ligne 102 est tangentiel à la circonférence 103, l'outil de coupe sort de la fibre F puis poursuit son parcours le long de la circonférence 103 sans la rayer jusqu'à ce que le point $B_1$ soit tangentiel à la circonférence 103. Alors, le point $B_1$ de l'outil de coupe 10 établit la rayure $C_2$ jusqu'à ce que l'outil de coupe 10 se détache de la fibre. L'emplacement des rayures $C_1$ et $C_2$ ne joue pas de rôle puisque celles-ci auront une profondeur inférieure à 5 $\mu$m grâce à la lame souple 30. Aussi, le réglage en hauteur de l'outillage admet une certaine tolérance de l'ordre de 30 $\mu$m.

10

# REVENDICATIONS

1. Outillage de cassure collective de fibres optiques (F), du type comportant des premiers moyens définissant un plan de référence et une direction de translation parallèle au plan de référence, des deuxièmes moyens définissant une droite d'appui des fibres optiques (F) au sommet d'une surface convexe, la droite d'appui étant parallèle à la direction de translation des troisièmes moyens permettant de placer un outil de coupe (10) au-dessus du plan de référence, tout en autorisant sa translation le long d'une droite parallèle à la droite d'appui de telle sorte que la partie coupante de l'outil de coupe (10) puisse rayer toute fibre se trouvant sur la droite d'appui, l'outillage étant caractérisé en ce que les premiers moyens sont constitués par une plateforme (1) solidaire d'une réglette (2) de translation présentant une face parallèle à cette droite de translation, que les deuxièmes moyens comportent au moins un dispositif de pincement des fibres dans un plan contenant la droite d'appui, et que les troisièmes moyens comportent un support de l'outil de coupe (10) présentant une face destinée à reposer sur la plateforme et une face destinée à coulisser le long de la réglette (2), des moyens de réglage fin permettant de fixer la hauteur optimale de l'outil de coupe (10) au-dessus du plan de référence.

2. Outillage selon la revendication 1, caractérisé en ce que le dispositif de pincement comporte une pièce de préparation (P) d'où les fibres optiques (F) sortent parallèlement les unes aux autres, et un étau (16), la pièce de préparation (P) et l'étau (16) étant situés de part et d'autre d'un cylindre (13) dont la partie supérieure contient la droite d'appui des fibres optiques (F).

3. Outillage selon la revendication 1, caractérisé en ce que le support de l'outil de coupe comporte une première partie constituant un sabot (3) glissant sur la plateforme (1) le long de la réglette (2) de translation et une deuxième partie portant l'outil de coupe (10), la deuxième partie pouvant s'écarter et se rapprocher de la première partie.

4. Outillage selon la revendication 3, caractérisé en ce que la première partie du support de l'outil de coupe (10) comporte des colonnes (41 et 42) perpendiculaires au plan de référence et pénétrant dans la deuxième partie du support, de telle sorte que cette deuxième partie puisse coulisser le long des colonnes sous l'action de la vis différentielle (8).

5. Outillage selon la revendication 3, caractérisé en ce que la deuxième partie du support comporte des vis de réglage (12) permettant d'orienter le tranchant de l'outil de coupe (10).

6. Outillage selon l'une des revendications 1 à 5, caractérisé en ce que le tranchant de l'outil de coupe (10) a un rayon de courbure (R) compris entre 1 mm et 30 mm dans un plan perpendiculaire à l'axe des fibres.

7. Outillage selon la revendication 1, caractérisé en ce que le support de l'outil de coupe (10) comporte un dispositif ressort reliant un bloc fendu (11b), portant l'outil de coupe (10) au corps (20) dudit support.

8. Outillage selon la revendication 7, caractérisé en ce que le support de l'outil de coupe (10) comporte une vis de réglage (12b) permettant de déplacer le bloc fendu (11b) par rapport au corps (20) dudit support.

9. Outillage selon l'une des revendications 7 ou 8, caractérisé en ce que le dispositif ressort est une lame souple (30).

10. Outillage selon l'une des revendications 1 à 9, caractérisé en ce que le support de l'outil de coupe (10) comporte un trou cylindrique (34) vertical dans lequel l'outil de coupe (10) est mobile.

FIG.1

0045681

# FIG. 2

# FIG. 3

# FIG_4

# FIG_5

# FIG_6

**Office européen des brevets**

**RAPPORT DE RECHERCHE EUROPEENNE**

**0045681**
Numéro de la demande

EP 81 40 1187

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | US - A - 4 017 013 (HAWK)<br>* En entier *<br><br>-- | 1,2,3 | C 03 B 37/16 |
| | FR - A - 2 399 310 (NIPPON TELE-GRAPH AND TELEPHONE PUBLIC COR-PORATION)<br>* En entier *<br><br>---- | 1 | |

**DOMAINES TECHNIQUES RECHERCHES (Int. Cl.³)**

C 03 B 37/16
37/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 20-10-1981 | VAN DEN BOSSCHE |

OEB Form 1503.1 06.78